# EUROPÄISCHE PATENTSCHRIFT

(11) **EP 1 464 528 B1**
(45) Veröffentlichungstag und Bekanntmachung des Hinweises auf die Patenterteilung: **14.02.2007**
(21) Anmeldenummer: 04450036.1
(22) Anmeldetag: 19.02.2004
(51) Int. Cl.: B60K 15/03

(54) **Kraftstofftank für ein Fahrzeug**
Fuel tank for a vehicle
Reservoir de carburant pour un véhicule

(30) Priorität: 31.03.2003 AT 5002003
(43) Veröffentlichungstag der Anmeldung: 06.10.2004
(73) Patentinhaber: Alutech Gesellschaft m.b.H., 5651 Lend (AT)
(72) Erfinder: Hake, Till, Dipl.-Ing, 5620 Schwarzach (AT)
(74) Vertreter: Weiser, Andreas

(56) Entgegenhaltungen:
- EP-A- 0 310 879
- EP-A- 0 872 372
- WO-A-01/00434
- DE-A- 19 605 702

## Beschreibung

Die vorliegende Erfindung betrifft einen Kraftstofftank für ein Fahrzeug, mit einer umlaufenden, dünnwandigen Rumpfhülle, die durch stirnseitige Böden abgeschlossen ist, wobei die Rumpfhülle in Umfangsrichtung gesehen eine alternierende Abfolge von Abschnitten mit kleinem Krümmungsradius und Abschnitten mit großem Krümmungsradius aufweist.

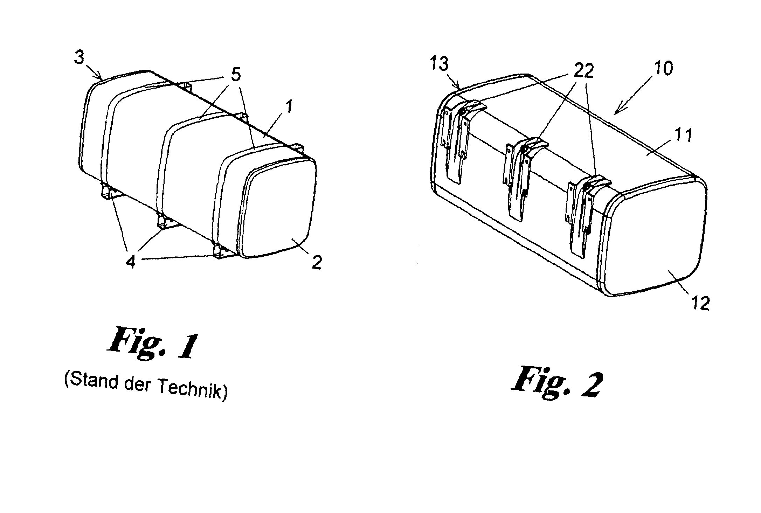

Fig. 1 zeigt einen derartigen Kraftstofftank nach dem Stand der Technik. Die Rumpfhülle 1 ist aus einem dünnwandigen Material, z.B. Stahl- oder Aluminiumblech, und die stirnseitigen Böden 2, 3 versteifen die Rumpfhülle zu der gezeigten Form, in der Abschnitte mit kleinem Krümmungsradius (Eckbereiche) mit Abschnitten mit großem Krümmungsradius (Seitenbereichen) abwechseln.

Solche Kraftstofftanks werden üblicherweise für Lastkraftwagen, Baumaschinen usw. verwendet und können ein beträchtliches Volumen aufweisen, z.B. bis zu 1000 l. Dies bedeutet im gefüllten Zustand ein Gewicht von bis zu 1 t und mehr, welches am Fahrzeug sicher verankert werden muß. Wie Fig. 1 zeigt, werden nach dem Stand der Technik zur Verankerung am Fahrzeug L-förmige Bügel bzw. Konsolenträger 4 verwendet, die an den Rahmen des Fahrzeuges geschraubt werden. Der Kraftstofftank wird auf die Konsolenträger 4 aufgelegt und mit Hilfe von Spannbändern 5 festgezurrt.

Diese Konstruktion hat mehrere Nachteile. Zum einen ist das Anbringen der Konsolenträger 4 am Fahrzeugrahmen und das Setzen der Spannbänder 5 aufwendig und zeitraubend. Zum anderen haben die Konsolenträger 4 ein beträchtliches Eigengewicht, das auf Kosten des aufnehmbaren Kraftstoffes und/oder der Nutzlast geht. Schließlich reduziert der Eigenplatzbedarf der Konsolenträger 4 das maximale für den Kraftstofftank am Einbauort zur Verfügung stehende Volumen und damit sein Nutzfassungsvermögens.

Aus der EP 0 872 372 A1 , die einen Kraftstofftank für ein Fahrzeug mit einer umlaufenden, dünnwandigen Rumpfhülle, die durch stirnseitige Böden abgeschlossen ist, offenbart, wobei die Rumpfhülle in Umfangsrichtung gesehen eine alternierende Abfolge von Abschnitten mit kleinem Krümmungsradius und Abschnitten mit großem Krümmungsradius aufweist und der Kraftstofftank eine Verankerungsvorrichtung aufweist, welche mit Verankerungselementen zur Verankerung am Fahrzeug ausgestattet ist, sind zwei Ausführungsformen von Befestigungen für Kraftstofftanks bekannt. In der einen Ausführungsform werden zwei als Tankträger dienende, stark durchbrochene Schwallwände mit abstehenden Verankerungselementen verwendet. Die Rumpfhülle ist in Segmente unterteilt, die beidseitig an die Schwallwände angeschweißt werden, so daß im zusammengebauten Zustand die Verankerungselemente nach außen ragend verbleiben. In der anderen Ausführungsform durchsetzt ein schwertartiger Tankträger eine Schlitzöffnung in der Rumpfhülle und wird an Befestigungspunkten mit einer Schwallwand vernietet oder verschweißt. Die erste Variante ist für Tanks mit einstückiger Rumpfhülle nicht geeignet; die zweite Variante benötigt zwingend das Vorhandensein einer Schwallwand, erfordert aufwendige Schweiß- bzw. Nietvorgänge und kann zu punktuellen Überbeanspruchungen und Verspannungen in der Rumpfhülle führen.

Die Erfindung setzt sich zum Ziel, einen Kraftstofftank zu schaffen, welcher die genannten Nachteile überwindet. Dieses Ziel wird mit einem Kraftstofftank der einleitend genannten Art erreicht, der sich erfindungsgemäß auszeichnet durch zumindest eine Verankerungsvorrichtung, welche einen an der Innenseite der Rumpfhülle anliegenden Innenteil und einen an der Außenseite der Rumpfhülle anliegenden Außenteil umfaßt, die durch zumindest einen die Rumpfhülle durchsetzenden Spannbolzen gegeneinander gespannt sind, wobei der Außenteil mit Verankerungselementen zur Verankerung am Fahrzeug ausgestattet ist, und wobei der Innen- und der Außenteil sich in Umfangsrichtung gesehen jeweils über einen Abschnitt mit kleinem Krümmungsradius und zumindest teilweise über einen angrenzenden Abschnitt mit großem Krümmungsradius erstrecken und an die genannten Krümmungsradien angepaßt sind.

Auf diese Weise wird erstmals ein Kraftstofftank mit einer integrierten Verankerungsvorrichtung zur direkten Montage am Fahrzeug geschaffen, der trotz seiner Fertigung aus dünnwandigem Material hohen dynamischen Kräften im Fahrbetrieb widerstehen kann. Die Verankerungsvorrichtung ergreift die dünnwandige Rumpfhülle formschlüssig zwischen Innenteil und Außenteil. Die Anordnung der Verankerungsvorrichtung in dem Abschnitt mit kleinem Krümmungsradius in Verbindung mit der Verlängerung bis in den angrenzenden Abschnitt mit großem Krümmungsradius ergibt einen gleichmäßigen Verlauf der Flächenpressung im Formschluß. Dadurch werden punktuelle Überbeanspruchungen, die zu Rissen in der Rumpfhülle, den Böden oder allfälligen im Inneren angeordneten Schwall- oder Trennwänden führen könnten, verhindert.

Der Kraftstofftank der Erfindung kann mit Hilfe seiner integrierten Verankerungsvorrichtungen direkt am Fahrzeug verankert werden. Durch den Wegfall der Konsolenträger ergibt sich eine beträchtliche Gewichtseinsparung, und das Volumen des Kraftstofftanks kann um den zuvor für die Konsolenträger benötigten Raum erhöht werden. Der Kraftstofftank kann zusammen mit seinen Verankerungsvorrichtungen vom Zulieferer vorgefertigt und dem Fahrzeughersteller als vorgefertigtes Modul zur Verfügung gestellt werden. Die Montage am Fahrzeug kann in einem einzigen Schritt mit Hilfe der Verankerungselemente erfolgen. Darüber hinaus eröffnet die erfindungsgemäße Konstruktion eine Standardisierung der Verankerungselemente, was die Logistik der Fertigung, Bevorratung, der Auswahl und des Einbaus unterschiedlicher Fahrzeugtanks für verschiedene Fahrzeugtypen wesentlich vereinfacht.

Eine bevorzugte Ausführungsform der Erfindung zeichnet sich dadurch aus, daß der Innenteil und der Außenteil streifenförmig sind. Mit dieser Form kann unter minimalem Materialeinsatz eine gleichmäßige Flächenpressung erzielt werden.

Insbesondere bei großvolumigen Kraftstofftanks kann optional vorgesehen werden, daß der Innenteil zu einem über den Innenumfang der Rumpfhülle umlaufenden Ring verlängert ist, um eine ausreichende Kraftaufnahme zu gewährleisten.

In jedem Fall ist es besonders günstig, wenn der Innenteil und/oder der Außenteil mit Versteifungsrippen versehen sind, um die Krafteinleitung vom Spannbolzen ausgehend über die gesamte Anlagefläche zu verteilen.

Die Versteifungsrippe des Innenteiles kann dabei zu einer sich über die lichte Weite der Rumpfhülle erstreckenden Schwall- oder Trennwand ausgedehnt sein, wenn eine noch stärkere Versteifung erwünscht ist.

Besonders vorteilhaft ist es jedoch, wenn bei einem Kraftstofftank, der zumindest eine sich über die lichte Weiter der Rumpfhülle erstreckende Schwall- oder Trennwand enthält, die Verankerungsvorrichtung knapp neben der Schwall- oder Trennwand, jedoch gesondert von dieser angeordnet ist. Diese Maßnahme beruht auf der Erkenntnis, daß gerade die mechanische Entkopplung von Verankerungsvorrichtung und nebenliegender Schwall- oder Trennwand entscheidend für das dynamische Elastizitätsverhalten des Kraftstofftanks ist, um das Entstehen von Spannungsrissen im Fahrbetrieb zu verhindern.

Der Innen- und der Außenteil können durch mehrere verteilte Spannbolzen gegeneinander gespannt werden, wenn die Größe des Tanks dies erfordert. Bevorzugt wird jedoch vorgesehen, daß pro Verankerungsvorrichtung ein Spannbolzen vorgesehen ist, welcher den Abschnitt mit kleinem Krümmungsradius durchsetzt. Dies erfordert nur einen einzigen Durchtritt durch die Rumpfhülle, was dem Entstehen von Spannungsrissen weiter entgegenwirkt.

Als Spannbolzen kann jede beliebige in der Technik bekannte Konstruktion verwendet werden, z.B. ein Spannhebel mit Exzentern usw. Eine besonders kostengünstige, für die Zwecke der Erfindung ausreichende Lösung besteht jedoch darin, daß der Spannbolzen eine Spannschraube mit Mutter ist.

Der Kraftstofftank kann aus jedem beliebigen Material gefertigt sein. Bevorzugt werden der Tank, der Innenteil und der Außenteil aus Aluminium gefertigt. Dadurch ergibt sich ein minimales Gewicht bei ausgezeichneter Elastizität und Tragfestigkeit.

Der Außenteil und der Innenteil können direkt an der Rumpfhülle anliegen, beispielsweise wenn diese aus Kunststoff gefertigt ist. Besonders günstig, insbesondere im Falle einer Fertigung aus Aluminium, ist es jedoch, wenn zwischen Außenteil und Rumpfhülle sowie zwischen Rumpfhülle und Innenteil jeweils eine Zwischenlage aus elastischem Material angeordnet ist. Dies erhöht die Elastizität der errichteten Flächenpressung und reduziert weiter die Gefahr von Spannungsrissen.

Bei kleinen Kraftstofftanks ist es denkbar, nur eine einzige Verankerungsvorrichtung vorzusehen. Bevorzugt werden aber mehrere Verankerungsvorrichtungen in Abständen über die Axialerstreckung der Rumpfhülle verteilt. Damit können Kraftstofftanks beliebiger Axiallänge aufgebaut und sicher am Fahrzeug verankert werden.

Als Verankerungselemente können alle in der Technik bekannten Arten von Befestigungen, Kupplungen usw. verwendet werden, beispielsweise Verschraubungen, Steckverbindungen, Bajonettverschlüsse usw. Gemäß einer bevorzugten Ausführungsform der Erfindung werden Verankerungselemente in Form von Flanschen vorgesehen, welche Schlitze und/oder Bohrungen für den Eingriff von Verankerungsstiften des Fahrzeugs aufweisen. Auf diese Weise kann der Kraftstofftank bei der Montage am Fahrzeug einfach auf entsprechend am Fahrzeug vorgesehene Verankerungsstifte aufgesteckt und z.B. mit Hilfe von Muttern gesichert werden.

Die Erfindung wird nachstehend anhand eines in den Zeichnungen dargestellten Ausführungsbeispieles näher erläutert. In den Zeichnungen zeigt
Fig. 1 einen Kraftstofftank und seine Montagekomponenten nach dem Stand der Technik,
Fig. 2 den Kraftstofftank der Erfindung in einer Perspektivansicht,
Fig. 3 den Innenteil einer der Verankerungsvorrichtungen des Kraftstofftanks von Fig. 2 in einer Perspektivansicht in Verbindung mit der ausschnittsweise und strichliert dargestellten Rumpfhülle des Kraftstofftanks, und
Fig. 4 den Außenteil einer der Verankerungsvorrichtungen des Kraftstofftanks von Fig. 2 in derselben Darstellungsweise.

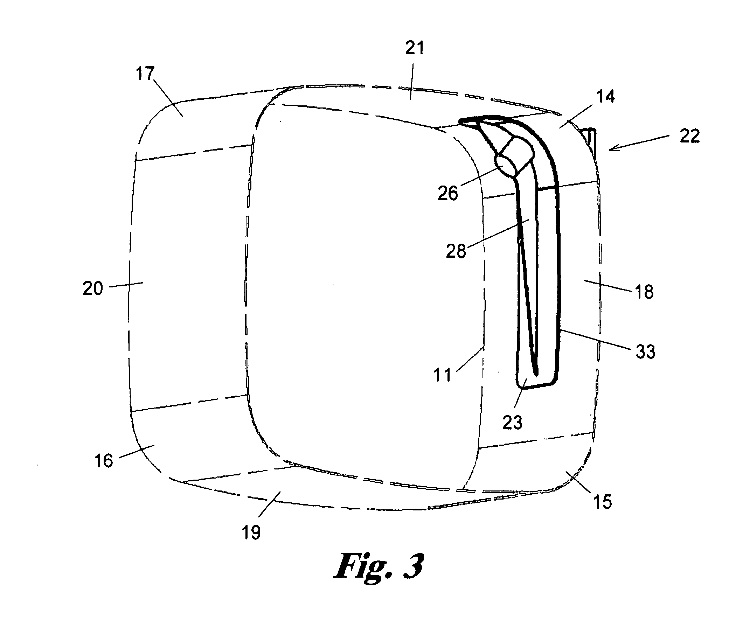

Gemäß Fig. 2 weist ein Kraftstofftank 10 für ein Fahrzeug eine umlaufende Rumpfhülle 11 aus dünnwandigem Material auf, z.B. Aluminiumblech, die auf beiden Stirnseiten durch je einen Boden 12, 13 abgeschlossen ist. Der Kraftstofftank 10 besitzt eine im wesentlichen abgerundet-parallelepipedische Form, wobei die Böden 12, 13 etwa die Form eines abgerundeten Quadrats haben. Dadurch weist die Rumpfhülle 11 in Umfangsrichtung gesehen eine alternierende Abfolge von Abschnitten 14, 15, 16, 17 mit kleinem Krümmungsradius und Abschnitten 18, 19, 20, 21 mit großem Krümmungsradius auf (Fig. 3). Dies ergibt eine maximale Ausnützung des für einen solchen Kraftstofftank an einem Fahrzeug üblicherweise vorgesehenen Raumes. Es versteht sich aber, daß diese Form nicht zwingend ist, beispielsweise könnte auch eine andere Anzahl oder Anordnung von Abschnitten vorgesehen werden.

Im Inneren des Kraftstofftankes 10 können senkrecht zur Axialerstreckung der Rumpfhülle 11 verlaufende Schwall- oder Trennwände (nicht gezeigt) zur Versteifung, zur Segmentierung des Kraftstofftankes in einzelne Kammern, und/oder zur Behinderung von Flüssigkeitsbewegungen im Fahrbetrieb angeordnet werden, wie in der Technik bekannt.

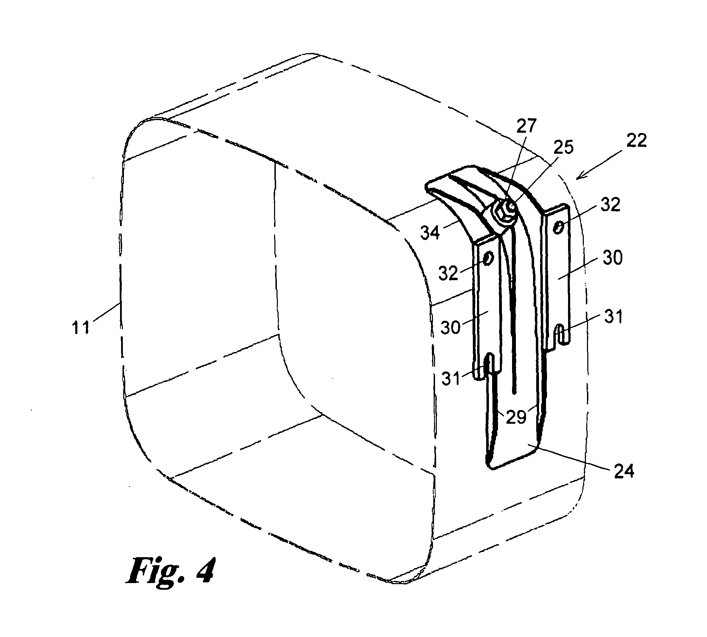

Wie aus Fig. 2 ersichtlich, ist der Kraftstofftank 10 mit drei Verankerungsvorrichtungen 22 ausgestattet, die in gegenseitigen Abständen von z.B. 50 cm über die Axialerstreckung der Rumpfhülle 11 verteilt sind. Eine der Verankerungsvorrichtungen 22 ist in den Fig. 3 und 4 ausführlicher dargestellt.

Jede Verankerungsvorrichtung 22 weist einen Innenteil 23 (Fig. 3) und einen Außenteil 24 (Fig. 4) auf. Der Innenteil 23 liegt an der Innenseite und der Außenteil 24 an der Außenseite der Rumpfhülle 11 an. Der Innen- und der Außenteil 23, 24 sind durch einen Spannbolzen 25 gegeneinander gespannt, welcher eine Bohrung (nicht gezeigt) der Rumpfhülle 11 durchsetzt, sodaß die Rumpfhülle 11 dazwischen eingespannt ist.

Der Spannbolzen 25 ist im gezeigten Beispiel eine Spannschraube, welche in einem Dom 26 des Innenteiles 23 verankert ist, die Rumpfhülle 11 und den Außenteil 24 durchsetzt und mit Hilfe einer Mutter 27 festgezogen ist. Auch mehrere Spannbolzen 25 könnten über die Verankerungsvorrichtung 22 verteilt vorgesehen werden, falls erforderlich.

Der Innenteil 23 und der Außenteil 24 besitzen jeweils Streifenform und erstrecken sich über zumindest einen Abschnitt 14 mit kleinem Krümmungsradius und zumindest teilweise über einen angrenzenden Abschnitt 18 mit großem Krümmungsradius. Der Innenteil 23 und der Außenteil 24 sind dabei genau an diese Krümmungsradien angepaßt, sodaß sie die Rumpfhülle 11 formschlüssig, d.h. mit Flächenpressung ergreifen. In einer alternativen Ausführungsform (nicht gezeigt) könnte der Innenteil 23 zu einem über den gesamten Innenumfang der Rumpfhülle 11 umlaufenden Ring verlängert sein.

Sowohl der Innenteil 23 als auch der Außenteil 24 sind jeweils mit Versteifungsrippen 28, 29 versehen. Die Versteifungsrippe 28 des Innenteiles 23 könnte optional zu einer sich über die gesamte lichte Weite der Rumpfhülle 11 erstreckenden Schwall- oder Trennwand ausgedehnt sein (nicht dargestellt). Bevorzugt ist die Verankerungsvorrichtung 22 jedoch von jedweder im Kraftstofftank 10 angeordneten Schwall- oder Trennwand mechanisch entkoppelt, besonders bevorzugt aber knapp neben einer solchen angeordnet. Beispielsweise könnte knapp neben der mittleren Verankerungsvorrichtung 22 in Fig. 2 eine herkömmliche Schwallwand im Kraftstofftank 10 angeordnet sein.

Der Außenteil 24 ist mit Verankerungselementen 30 zur Verankerung an einem Fahrzeug, z.B. dessen Rahmen, ausgestattet. Die Verankerungselemente 30 sind in dem gezeigten Beispiel Flansche, welche an den Versteifungsrippen 29 ansetzen und an ihren unteren Enden Schlitze 31 und an ihren oberen Enden Bohrungen 32 aufweisen. Die Schlitze 31 und Bohrungen 32 sind für den Eingriff von (nicht gezeigten) Verankerungs- bzw. Gewindestiften des Fahrzeugs bestimmt. Bei der Montage werden zunächst die Schlitze 31 auf entsprechende Verankerungsstifte des Fahrzeugs aufgesetzt, und anschließend werden die Bohrungen 32 auf weitere Gewindestifte des Fahrzeugs aufgefädelt und mit Muttern gesichert.

Der Kraftstofftank 10 und die Verankerungsvorrichtungen 22 sind bevorzugt aus Aluminium gefertigt. In diesem Fall wird bevorzugt zwischen Innenteil 23 und Rumpfhülle 11 sowie zwischen Rumpfhülle 11 und Außenteil 24 jeweils eine dünne Zwischenlage 33, 34 aus einem elastischen Material angeordnet, beispielsweise aus Gummi. Die Zwischenlagen 33, 34 dienen nicht nur zur Erhöhung der Elastizität des Formschlusses zwischen Verankerungsvorrichtung 22 und Rumpfhülle 11, sondern dichten auch den Durchtritt des Spannbolzens 25 durch die Rumpfhülle 11 ab.

Die Erfindung ist selbstverständlich nicht auf die dargestellten Ausführungsbeispiele beschränkt, sondern umfaßt alle Varianten und Modifikationen, die in den Rahmen der angeschlossen Ansprüche fallen.

## Patentansprüche

1. Kraftstofftank (10) für ein Fahrzeug, mit einer umlaufenden, dünnwandigen Rumpfhülle (11), die durch stirnseitige Böden (12, 13) abgeschlossen ist, wobei die Rumpfhülle (11) in Umfangsrichtung gesehen eine alternierende Abfolge von Abschnitten (14-17) mit kleinem Krümmungsradius und Abschnitten (18-21) mit großem Krümmungsradius aufweist, wobei der Kraftstofftank zumindest eine Verankerungsvorrichtung (22), aufweist welche einen an der Innenseite der Rumpfhülle (11) anliegenden Innenteil (23) und einen an der Außenseite der Rumpfhülle (11) anliegenden Außenteil (24) umfaßt, die **durch** zumindest einen die Rumpfhülle (11) durchsetzenden Spannbolzen (25) gegeneinander gespannt sind, wobei der Außenteil (24) mit Verankerungselementen (30-32) zur Verankerung am Fahrzeug ausgestattet ist, und wobei der Innen- und der Außenteil (23, 24) sich in Umfangsrichtung gesehen jeweils über einen Abschnitt (14) mit kleinem Krümmungsradius und zumindest teilweise über einen angrenzenden Abschnitt (18) mit großem Krümmungsradius erstrecken und an die genannten Krümmungsradien angepaßt sind.

2. Kraftstofftank nach Anspruch 1, **dadurch gekennzeichnet, daß** der Innenteil (23) und der Außenteil (24) streifenförmig sind.

3. Kraftstofftank nach Anspruch 1 oder 2, **dadurch gekennzeichnet, daß** der Innenteil (23) zu einem über den Innenumfang der Rumpfhülle (11) umlaufenden Ring verlängert ist.

4. Kraftstofftank nach einem der Ansprüche 1 bis 3, **dadurch gekennzeichnet, daß** der Innenteil (23) und/oder der Außenteil (24) mit Versteifungsrippen (28, 29) versehen sind.

5. Kraftstofftank nach Anspruch 4 mit einem Innenteil mit einer Versteifungsrippe, **dadurch gekennzeichnet, daß** die Versteifungsrippe (28) des Innenteiles (23) zu einer sich über die lichte Weite der Rumpfhülle (11) erstreckenden Schwall- oder Trennwand ausgedehnt ist.

6. Kraftstofftank nach einem der Ansprüche 1 bis 4, der zumindest eine sich über die lichte Weite der Rumpfhülle erstreckende Schwall- oder Trennwand enthält, **dadurch gekennzeichnet, daß** die Verankerungsvorrichtung (22) knapp neben der Schwall- oder Trennwand, jedoch gesondert von dieser angeordnet ist.

7. Kraftstofftank nach einem der Ansprüche 1 bis 6, **dadurch gekennzeichnet, daß** pro Verankerungsvorrichtung (22) ein Spannbolzen (25) vorgesehen ist, welcher den Abschnitt (14) mit kleinem Krümmungsradius durchsetzt.

8. Kraftstofftank nach einem der Ansprüche 1 bis 7, **dadurch gekennzeichnet, daß** der Spannbolzen (25) eine Spannschraube mit Mutter (27) ist.

9. Kraftstofftank nach einem der Ansprüche 1 bis 8, **dadurch gekennzeichnet, daß** der Tank (10), der Innenteil (23) und der Außenteil (24) aus Aluminium gefertigt sind.

10. Kraftstofftank nach einem der Ansprüche 1 bis 9, **dadurch gekennzeichnet, daß** zwischen Außenteil (24) und Rumpfhülle (11) sowie zwischen Rumpfhülle (11) und Innenteil (23) jeweils eine Zwischenlage (33, 34) aus elastischem Material angeordnet ist.

11. Kraftstofftank nach einem der Ansprüche 1 bis 10, **dadurch gekennzeichnet, daß** mehrere Verankerungsvorrichtungen (22) in Abständen über die Axialerstreckung der Rumpfhülle (11) verteilt sind.

12. Kraftstofftank nach einem der Ansprüche 1 bis 11, **dadurch gekennzeichnet, daß** die Verankerungselemente (30-32) Flansche (30) sind, welche Schlitze (31) und/oder Bohrungen (32) für den Eingriff von Verankerungsstiften des Fahrzeugs aufweisen.

## Claims

1. Fuel tank (10) for a vehicle, having a peripheral thin-walled body casing (11) which is closed off at the ends by end walls (12, 13), the body casing (11) comprising - seen in the peripheral direction - an alternating succession of portions (14-17) of small radius of curvature and portions (18-21) of large radius of curvature, the fuel tank having at least one anchoring arrangement (22) which comprises, lying against the inside of the body casing (11), an internal part (23) and, lying against the outside of the body casing (11), an external part (24), which parts are clamped against one another by at least one clamping bolt (25) passing through the body casing (11), the external part (24) being provided with anchoring elements (30-32) for anchoring to the vehicle, and the internal and external parts (23, 24) in each case extending - seen in the peripheral direction - over a portion (14) of small radius of curvature and at least partly over an adjacent portion (18) of large radius of curvature and being matched to the mentioned radii of curvature.

2. Fuel tank according to claim 1, **characterised in that** the internal part (23) and the external part (24) are strip-shaped.

3. Fuel tank according to claim 1 or 2, **characterised in that** the internal part (23) extends to form a ring running around the internal periphery of the body casing (11).

4. Fuel tank according to one of claims 1 to 3, **characterised in that** the internal part (23) and/or external part (24) are provided with stiffening ribs (28, 29).

5. Fuel tank according to claim 4, having an internal part having a stiffening rib, **characterised in that** the stiffening rib (28) of the internal part (23) extends out to form a slosh wall or partition wall extending over the internal width of the body casing (11).

6. Fuel tank according to one of claims 1 to 4, comprising at least one slosh wall or partition wall exending over the internal width of the body casing, **characterised in that** the anchoring arrangement (22) is arranged close beside the slosh wall or partition wall, but separate therefrom.

7. Fuel tank according to one of claims 1 to 6, **characterised in that** for each anchoring arrangement (22) there is provided a clamping bolt (25) which passes through the portion (14) of small radius of curvature.

8. Fuel tank according to one of claims 1 to 7, **characterised in that** the clamping bolt (25) is a clamping screw with nut (27).

9. Fuel tank according to one of claims 1 to 8, **characterised in that** the tank (10), the internal part (23) and the external part (24) are made of aluminium.

10. Fuel tank according to one of claims 1 to 9, **characterised in that** between the external part (24) and the body casing (11) and also between the body casing (11) and the internal part (23) there is in each case arranged an intermediate layer (33, 34) of resilient material.

11. Fuel tank according to one of claims 1 to 10, **characterised in that** a plurality of anchoring arrangements (22) are distributed at intervals over the axial extent of the body casing (11).

12. Fuel tank according to one of claims 1 to 11, **characterised in that** the anchoring elements (30-32) are flanges (30), which have slots (31) and/or bores (32) for the engagement of anchoring pins of the vehicle.

## Revendications

1. Réservoir (10) de carburant pour un véhicule, doté d'une enveloppe circulaire formant tronc (11), à paroi mince, fermée par des panneaux frontaux (12, 13), l'enveloppe formant tronc (11) présentant, vu dans le sens circonférentiel, une succession alternée de secteurs (14-17) à petit rayon de courbure, et de secteurs (18-21) à grand rayon de courbure, le réservoir de carburant présentant au moins un dispositif d'ancrage (22), qui comprend une partie interne (23) disposée sur la face interne de l'enveloppe formant tronc (11) et une partie extérieure (24) disposée sur la face externe de l'enveloppe formant tronc (11), qui sont serrées l'une contre l'autre au moyen d'au moins un boulon de serrage (25) traversant l'enveloppe formant tronc (11), la partie extérieure (24) étant équipée d'éléments d'ancrage (30-32) pour l'ancrage au véhicule, et les parties interne et externe (23, 24) s'étendant chacune, vu dans le sens circonférentiel, sur un secteur (14) à petit rayon de courbure et au moins partiellement sur un secteur adjacent (18) à grand rayon de courbure et étant adaptées auxdits rayons de courbure.

2. Réservoir de carburant selon la revendication 1, **caractérisé en ce que** la partie interne (23) et la partie externe (24) sont en forme de bandes.

3. Réservoir de carburant selon la revendication 1 ou 2, **caractérisé en ce que** la partie interne (23) se prolonge par un anneau s'étendant sur le périmètre interne de l'enveloppe formant tronc (11).

4. Réservoir de carburant selon l'une des revendications 1 à 3, **caractérisé en ce que** la partie interne (23) et/ou la partie externe (24) dispose de nervures raidisseuses (28, 29).

5. Réservoir de carburant selon la revendication 4 avec une partie interne dotée d'une nervure raidisseuse, **caractérisé en ce que** la nervure raidisseuse (28) de la partie interne (23) s'étend sur le diamètre interne de l'enveloppe formant tronc (11), en un brise-flot ou en une cloison de séparation.

6. Réservoir de carburant selon l'une des revendications 1 à 4, qui contient au moins un brise-flot ou une cloison de séparation s'étendant sur le diamètre interne de l'enveloppe formant tronc **caractérisé en ce que** le dispositif d'ancrage (22) est disposé tout près, tout en étant distinct, du brise-flot ou de la cloison de séparation.

7. Réservoir de carburant selon l'une des revendications 1 à 6, **caractérisé en ce qu'**un boulon de serrage (25) est prévu pour chaque dispositif d'ancrage (22), qui traverse la section (14) à petit rayon de courbure.

8. Réservoir de carburant selon l'une des revendications 1 à 7, **caractérisé en ce que** le boulon de serrage (25) est une vis avec écrou (27).

9. Réservoir de carburant selon l'une des revendications 1 à 8, **caractérisé en ce que** le réservoir (10), la partie interne (23) et la partie externe (24) sont réalisés en aluminium.

10. Réservoir de carburant selon l'une des revendications 1 à 9, **caractérisé en ce qu'**entre la pièce externe (24) et l'enveloppe formant tronc (11), de même qu'entre l'enveloppe formant tronc (11) et la pièce interne (23), est disposée une couche intermédiaire (33, 34) en matériau élastique.

11. Réservoir de carburant selon l'une des revendications 1 à 10, **caractérisé en ce que** plusieurs dispositifs d'ancrage (22) sont répartis espacés selon la direction axiale de l'enveloppe formant tronc (11).

12. Réservoir de carburant selon l'une des revendications 1 à 11, **caractérisé en ce que** les éléments d'ancrage (30-32) sont des brides (30) qui présentent des encoches (31) et/ou des perçages (32) pour l'engagement de tiges d'ancrage du véhicule.
